# EUROPÄISCHE PATENTANMELDUNG

(11) **EP 0 903 913 A1**
(43) Veröffentlichungstag der Anmeldung: **24.03.1999**
(21) Anmeldenummer: 97116419.9
(22) Anmeldetag: 20.09.1997
(51) Int. Cl.: H04M 1/72, H04M 9/02

(54) **Zweiseitiges Telefonanlagensystem zum Führen von Telefongesprächen zwischen Gesprächspartnern**

(71) Anmelder: Bässgen, Stefan, 79104 Freiburg (DE)
(72) Erfinder: Bässgen, Stefan, 79104 Freiburg (DE)
(74) Vertreter: Goy, Wolfgang, Dipl.-Phys.

(57) **Zusammenfassung**

Die Erfindung betrifft ein zweiseitiges Telefonanlagensystem zum Führen von Telefongesprächen zwischen Gesprächspartnern. Dabei befindet sich an den beiden Enden einer Telefonleitung 6 jeweils eine Telefonanlage 1. Jede dieser Telefonanlagen 1 weist wenigstens zwei Telefonhörer 3 auf. Die Telefonanlagen 1 sind dabei derart ausgebildet, daß zwischen ihnen über die gleiche Telefonleitung 6 entsprechend der Anzahl der Telefonhörer 3 mehrere Telefongespräche gleichzeitig, jedoch getrennt voneinander führbar sind, ohne sich gegenseitig zu stören.

## Beschreibung

Die Erfindung betrifft ein zweiseitiges Telefonanlagensystem zum Fuhren von Telefongesprächen zwischen Gesprächspartnern mit einer Telefonleitung, an deren beiden Enden sich jeweils eine Telefonanlage mit Telefonhörer befindet.

Unter einem derartigen "zweiseitigen" Telekommunikationsübertragungssystem ist im erfindungsgemäßen Sinne die Möglichkeit einer Telefonverbindung zwischen Teilnehmern an den beiden Enden der Verbindung zu verstehen, also allgemein die Möglichkeit, daß die Telekommunikationsanlage zwischen Gesprächspartnern genutzt werden kann. Unter den Schutz des prinzipiellen Anlagensystems fallen auch die einzelnen Telefonanlagen auf der jeweiligen Seite der Gesprächsleitung, welche dazu geeignet und in der Lage sind, die erfindungsgemäße Idee der Gesprächsmöglichkeiten zu realisieren.

Es kommt häufig vor, daß ein Partnerpaar mit einem anderen Partnerpaar telefoniert. Wenn beispielsweise die Männer miteinander telefonieren, wollen oft auch noch die Frauen miteinander telefonieren und umgekehrt. Dies ist bislang nur dann möglich, wenn die Gespräche hintereinander geführt werden. Es fallen dadurch zusätzliche Telefongebühren an, und es kostet auch mehr Freizeit, da das zweite Gesprächspaar warten muß bis das erste Gesprächspaar fertig ist.

Davon ausgehend liegt der Erfindung die **Aufgabe** zugrunde, ein verbessertes zweiseitiges Telefonanlagensystem zum Führen von Telefongesprächen zwischen Gesprächspartnern zu schaffen.

Als technische **Lösung** wird mit der Erfindung vorgeschlagen, daß jedes der beiden Telefonanlagen wenigstens zwei Telefonhörer aufweist und daß zwischen den beiden Telefonanlagen über die gleiche Telefonleitung entsprechend der Anzahl der Telefonhörer mehrere Telefongespräche gleichzeitig, jedoch getrennt voneinander führbar sind.

Dadurch ist eine Art Partner-Telefon geschaffen, dessen Grundidee darin besteht, daß mehrere Telefongespräche unabhängig voneinander, jedoch gleichzeitig auf der gleichen Telefonleitung, nämlich auf nur einer einzigen Telefonleitung geführt werden können. Voraussetzung zur Realisierung einer derartigen Telekommunikation ist natürlich, daß beide Seiten über eine derartige Telefonanlage verfügen, welche dazu geeignet sind, unabhängig voneinander auf der gleichen Telefonleitung mehrere Telefongespräche führen zu können. Da somit erfindungsgemäß zwei (oder noch mehr) Gesprächspaare ihr Telefongespräch gleichzeitig miteinander führen können, ohne sich gegenseitig zu stören, können dadurch Telefongebühren eingespart werden. Weil weiterhin das zweite Gesprächspaar nicht warten muß, bis das erste Gesprächspaar fertig ist, wird gleichzeitig auch Freizeit gespart. Technisch wird diese Gesprächstrennung dadurch realisiert, daß die Signale der beiden Gespräche auf der Telefonleitung voneinander getrennt werden, so daß die beiden Signalstränge in der Telefonanlage der Gegenseite voneinander getrennt auf den jeweiligen Telefonhörer aufgegeben werden. Dabei werden mit einem geeigneten Verfahren beide Gespräche gemultiplext über die gleiche Leitung übertragen. Die gemultiplexte Übertragung kann dabei erst beginnen, wenn an beiden Telefonanlagen beide Hörer abgehoben sind, oder auch schon, wenn auf beiden Seiten erkannt wird, daß es sich um Telefonanlagen handelt, welche für dieses Übertragungssystem geeignet sind. Die Telefonverbindung wird beendet, wenn an einem der beiden Telefonanlagen sämtliche Hörer aufgelegt sind. Die Elektronik des Telefonanlagensystems ist somit derart auszubilden, daß parallel zu dem einen Gespräch auf der gleichen Leitung und zur gleichen Zeit ein zweites Gespräch geführt werden kann, ohne daß sich die beiden Gespräche gegenseitig stören.

Eine Weiterbildung schlägt vor, daß die Telefonhörer einem einzigen Telefonapparat der Telefonanlage zugeordnet sind. Dies erscheint die zweckmäßigste Ausführung, d.h. ein Telefonanpparat mit zwei (oder bei Bedarf mit noch mehr) Telefonhörern in der Art einer Hör-Sprech-Garnitur. Der Vorteil liegt darin, daß die Installation nicht komplizierter ist als die eines normalen Telefonanpparates. Zweckmäßigerweise besitzt einer der beiden Telefonhörer ein sehr langes Kabel, damit eine der telefonierenden Personen etwas weiter weg gehen kann, um nicht akustisch die andere, mit dem gleichen System telefonierende Person zu stören. Selbstverständlich ist es auch denkbar, einen der beiden Telefonhörer oder gar beide Telefonhörer kabellos über Funk anzusteuern.

Alternativ hierzu wird vorgeschlagen, daß die Telefonanlage entsprechend der Anzahl der Telefonhörer mehrere Telefonapparate aufweist. Dadurch können beispielsweise ganz normale, herkömmliche Telefonapparate verwendet werden, welche an eine zentrale Steuereinheit angeschlossen sind.

Eine bevorzugte Weiterbildung der Erfindung schlägt vor, daß die Signalübertragung digital erfolgt. Die Ausführung als ISDN-Telefon wäre am einfachsten, da man durch die zur Verfügung stehende Bandbreite von 64 kB/sec mit einem einfachen Verfahren die Information für zwei Gespräche in der zur Verfügung stehenden Brandbreite unterbringen kann, beispielsweise mittels Differenz-PCM.

Alternativ wird vorgeschlagen, daß die Signalübertragung analog erfogt. Dies wäre mittels Datenkompression möglich, da eine derartige Kompression es erlaubt, auf einer analogen Telefonleitung zwei Gespräche gleichzeitig zu übertragen.

Eine Weiterbildung des erfindungsgemäßen Systems schlägt vor, daß die Trennung der Telefongespräche aufhebbar ist. Die Grundidee hier besteht darin, daß zwar in der Grundkonfiguration zwei Gespräche getrennt und unabhängig voneinander führbar sind, daß aber bei einem entsprechenden Bedarf diese Trennung dergestalt aufgehoben werden kann, daß beispielsweise eine 4-er Konferenz durchgeführt werden kann, bei der sämtliche vier Personen gleichzeitig miteinander sprechen und sich hören können. Technisch bedeutet dies, daß die Signaltrennung auf der einzigen Telefonleitung zwar immer noch vorhanden sein kann, daß aber die Telefonanlagen der beiden Gegenstellen diese Trennung auf die beiden Telefonhörer nicht vornimmt, sondern daß die ankommenden Signale auf beide Telefonhörer aufgegeben werden.

Eine weitere Weiterbildung schlägt vor, daß die Zuordnungen der Telefongespräche zu den Telefonhörern der Telefonanlage vertauschbar sind. Die Grundidee hier ist, daß die Gesprächspartner vertauscht werden. Dies kann durch einen einfachen Tastendruck erfolgen.

Eine weitere Weiterbildung schlägt eine Signaleinrichtung an der Telefonanlage zur Anzeige vor, daß die Telefonanlage der Gegenseite kompatibel ausgebildet ist. Dadurch wird den Gesprächsteilnehmern signalisiert, daß eine Telekommunikation im erfindungsgemäßen Sinne durchgeführt werden kann. Voraussetzung ist, daß die beiden Telefonanlagen entsprechend ausgebildet sind. Zu diesem Zweck verfügen die Telefonanlagen jeweils über eine Kennung, die erkennen kann, ob an der anderen Seite der Verbindung ein kompatibles Telefon vorhanden ist. Diese Kennung kann beispielsweise als Signatur im untersten Audio-Bit vorhanden sein. Findet die Telefonanlage ein normales (ISDN)-Telefon vor, wird normal codiert und es lassen sich damit ganz normale Telefonate führen. In diesem Fall kann der zweite Telefonhörer als Mithöreinrichtung dienen. Sobald auf der Gegenseite ebenfalls eine entsprechend ausgebildete Telefonanlage erkannt wird, wird dies über die Signaleinrichtung angezeigt. Dann ist die Möglichkeit gegeben, daß auf jeder Seite der Telefonverbindung jeweils zwei Personen telefonieren können.

Eine weitere Weiterbildung schlägt eine Signaleinrichtung an den Telefonanlagen zur Anzeige vor, daß bei der Telefonanlage der Gegenseite der zweite Telefonhörer abgenommen worden ist. Die Grundidee hier besteht darin, daß dem anderen Telefon optisch oder auch akustisch signalisiert wird, daß der zweite Telefonhörer abgenommen wird. Bei der akustischen Signalisierung kann dabei die herkömmliche Telefonklingel verwendet werden, eventuell in einem anderen Ton. Wenn dann bei der anderen Telefonanlage auch der zweite Telefonhörer abgenommen wird, werden mit einem geeigneten Verfahren beide Gespräche gemultiplext und über die gleiche Leitung übertragen. Die gemultiplexte Übertragung kann dabei erst beginnen, wenn an beiden Telefonanlagen beide Telefonhörer abgenommen sind. Die Telefonverbindung wird beendet, wenn an einer der beiden Telefonanlagen beide Hörer aufgelegt sind.

Ein Ausführungsbeispiel eines zweiseitigen Telefonanlagensystems zum Führen von Telefongesprächen zwischen Gesprächspartnern wird nachfolgend anhand der schematischen Zeichnung beschrieben.

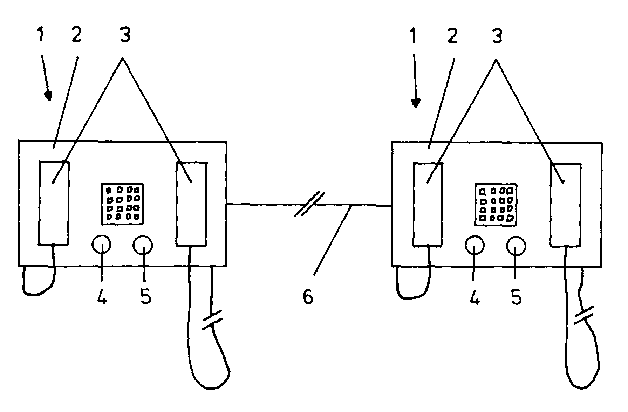

In der Zeichnung sind zwei Telefonanlagen 1 mit jeweils einem Telefonapparat 2 zu erkennen. Jeder dieser beiden Telefonapparate 2 weist jeweils zwei Telefonhörer 3 auf. Außerdem weist jeder Telefonapparat 2 zwei Signaleinrichtungen 4, 5 auf. Verbunden sind die beiden Telefonapparate 2 der Telefonanlagen 1 durch eine Telefonleitung 6.

Dieses zweiseitige Telefonanlagensystem zum Führen von Telefongesprächen funktioniert wie folgt.

Mittels des in der Zeichnung linken Telefonapparates 2 soll der in der Zeichnung rechte Telefonapparat 2 angerufen werden. Zu diesem Zweck hebt die entsprechende Person in der üblichen Weise den einen der beiden Telefonhörer 3 ab und stellt über die Tastatur die Verbindung zu dem rechten Telefonapparat 2 her. Die Gegenseite kann dann den einen der beiden Telefonhörer 3 des rechten Telefonapparates 2 abheben. Gleichzeitig wird über die optischen Signalenrichtungen 4 an beiden Telefonapparaten 2 signalisiert, daß es sich bei dem Telefonapparat 2 der jeweiligen Gegenseite um ein Gerät handelt, mittels dem eine doppelte Gesprächsführung möglich ist.

Will ein zweites Gesprächspaar auf den beiden Telefonapparaten 2 ebenfalls miteinander telefonieren, hebt die zweite Person den zweiten Telefonhörer 3 ab. Dies wird am Telefonapparat 2 der Gegenseite über die optische Signaleinrichtung 5 signalisiert. Dies bedeutet, daß dort die zweite Person ebenfalls den zweiten Telefonhörer 3 abnehmen und das Gespräch führen kann. Die beiden Gespräche können somit gleichzeitig, jedoch getrennt voneinander von den beiden Gesprächspaaren geführt werden, ohne sich gegenseitig zu stören. Das zweite Gesprächspaar (oder aber auch das erste Gesprächspaar) kann sein Gespräch durch Auflegen der Telefonhörer 3 beenden. Dies hat aber keinen Einfluß auf die Gesprächsverbindung des anderen Gesprächspaares, da dort weitertelefoniert werden kann. Erst wenn sämtliche Telefonhörer 3 des einen Telefonapparates 2 aufgelegt sind, wird die Telefonverbindung unterbrochen.

### Bezugszeichenliste

- 1: Telefonanlage
- 2: Telefonapparat
- 3: Telefonhörer
- 4, 5: Signaleinrichtungen
- 6: Telefonleitung

## Patentansprüche

1. Zweiseitiges Telefonanlagensystem zum Führen von Telefongesprächen zwischen Gesprächspartnern
mit einer Telefonleitung (6), an deren beiden Enden sich jeweils eine Telefonanlage (1) mit Telefonhörer (3) befindet,
**dadurch gekennzeichnet**,
daß jedes der beiden Telefonanlagen (1) wenigstens zwei Telefonhörer (3) aufweist und
daß zwischen den beiden Telefonanlagen (1) über die gleiche Telefonleitung (6) entsprechend der Anzahl der Telefonhörer (3) mehrere Telefongespräche gleichzeitig, jedoch getrennt voneinander führbar sind.

2. Telefonanlagensystem nach dem vorhergehenden Anspruch,
dadurch gekennzeichnet,
daß die Telefonhörer (3) einem einzigen Telefonapparat (2) der Telefonanlage (1) zugeordnet sind.

3. Telefonanlagensystem nach Anspruch 1,
dadurch gekennzeichnet,
daß die Telefonanlage (1) entsprechend der Anzahl der Telefonhörer (3) mehrere Telefonapparate (2) aufweist.

4. Telefonanlagensystem nach einem der vorhergehenden Ansprüche,
dadurch gekennzeichnet,
daß die Signalübertragung digital erfolgt.

5. Telefonanlagensystem nach einem der Ansprüche 1 bis 3,
dadurch gekennzeichnet,
daß die Signalübertragung analog erfolgt.

6. Telefonanlagensystem nach einem der vorhergehenden Ansprüche,
dadurch gekennzeichnet,
daß die Trennung der Telefongespräche aufhebbar ist.

7. Telefonanlagensystem nach einem der vorhergehenden Ansprüche,
dadurch gekennzeichnet,
daß die Zuordnungen der Telefongespräche zu den Telefonhörern (3) der Telefonanlagen (1) vertauschbar sind.

8. Telefonanlagensystem nach einem der vorhergehenden Ansprüche,
gekennzeichnet durch
eine Signaleinrichtung (4) an der Telefonanlage (1) zur Anzeige, daß die Telefonanlage (1) der Gegenseite kompatibel ausgebildet ist.

9. Telefonanlagensystem nach einem der vorhergehenden Ansprüche,
gekennzeichnet durch
eine Signaleinrichtung (5) an den Telefonanlagen (1) zur Anzeige, daß bei der Telefonanlage (1) der Gegenseite der zweite Telefonhörer (3) abgenommen worden ist.

10. Telefonanlage (1) zur Verwendung für ein zweiseitiges Telefonanlagensystem nach einem der Ansprüche 1 bis 9.
